# FASCICULE DE BREVET EUROPEEN

(11) **EP 3 274 160 B1**
(45) Date de publication et mention de la délivrance du brevet: **19.10.2022**
(21) Numéro de dépôt: 16713550.8
(22) Date de dépôt: 15.03.2016
(51) Int. Cl.: B29D 99/00, G01N 23/04, B29L 31/08, F01D 5/28

(54) **PROCÉDÉ DE FABRICATION D'UNE AUBE TÉMOIN POUR ÉTALONNAGE D'UN CONTRÔLE TOMOGRAPHIQUE ET AUBE TÉMOIN EN RÉSULTANT**
VERFAHREN ZUR HERSTELLUNG EINER KONTROLLKLINGE ZUR KALIBRIERUNG EINER TOMOGRAPHISCHEN INSPEKTION UND RESULTIERENDE KONTROLLKLINGE
METHOD FOR MANUFACTURING A CONTROL BLADE FOR CALIBRATING A TOMOGRAPHIC INSPECTION, AND RESULTING CONTROL BLADE

(30) Priorité: 23.03.2015 FR 1552382
(43) Date de publication de la demande: 31.01.2018
(73) Titulaire: SAFRAN AIRCRAFT ENGINES, 75015 Paris (FR)
(72) Inventeur: SOMANOU, Sara, 77550 Moissy-Cramayel Cedex (FR); DEJOS, Céline, 77550 Moissy-Cramayel Cedex (FR); PANIZZOLI, Franck, Paul, Dominique, Vital, 77550 Moissy-Cramayel Cedex (FR); ARSLAN, Philippe, 94140 Alfortville (FR)
(74) Mandataire: Cabinet Beau de Loménie
(86) Numéro de dépôt international: PCT/FR2016/050569
(87) Numéro de publication internationale: WO 2016/151215

(56) Documents cités:
- EP-A1- 1 920 909
- EP-B1- 1 920 909
- FR-A1- 2 695 163
- US-A1- 2013 195 671
- US-A1- 2015 017 005

## Description

### Arrière-plan de l'invention

L'invention se rapporte au contrôle non destructif, par tomographie aux rayons X, d'une aube de turbomachine en matériau composite, plus particulièrement une aube comprenant une armature tissée en trois dimensions. Elle concerne plus particulièrement la réalisation d'une aube témoin pour l'étalonnage du système tomographique appelé à contrôler systématiquement de telles aubes lors de leur fabrication. Les aubes en matériau composite ainsi contrôlées peuvent être, notamment, les aubes d'une soufflante d'un turboréacteur à double flux.

Il est connu par le document US 6 041 132 un contrôle non destructif par tomographie d'une telle aube de soufflante. Le processus de reconstruction tomographique est lié à la structure de la masse fibreuse, en l'occurrence constituée de plis d'un matériau en ruban. Selon ce document, la reconstruction tomographique est adaptée en fonction de ces plis. Plus précisément, au moins un pli de référence d'un modèle de référence est mémorisé dans un système de coordonnées non euclidien puis, lors du contrôle d'une aube réelle, on transforme les points du pli de référence en système de coordonnées euclidien de l'objet réel. Cette double transformation permet de mieux faire apparaître des défauts qui sont spécifiques à ce type d'aubes dont la masse fibreuse est constituée de plis d'un matériau en ruban, notamment la formation de rides.

Au contraire, l'invention concerne un contrôle non destructif par tomographie d'un type d'aube différent comprenant une ébauche ou préforme réalisée en fils ou fibres tissées en trois dimensions. Une telle préforme est noyée dans la résine qui est durcie lors d'un processus de polymérisation. Le brevet EP 1 526 285 au nom de la demanderesse décrit une telle aube composite à armature tissée en trois dimensions.

Au cours du processus de fabrication de ce type d'aube, différents défauts peuvent apparaître. Pour détecter et évaluer ces défauts, il faut procéder régulièrement à un étalonnage de l'installation tomographique, à l'aide d'une aube témoin comportant ces défauts, comme illustré dans la demande EP1 916 092 déposée au nom de la demanderesse et qui s'intéresse plus particulièrement au défaut spécifique qu'est la formation d'amas de résine au sein de la structure fibreuse.

Une telle aube témoin en matériau composite tissé dans laquelle ont été introduits ponctuellement des amas de résine est toutefois de fabrication particulièrement complexe avec la nécessité d'introduire ce défaut avant l'injection de la résine liquide. Elle aboutit donc à une pièce de référence figée qui ne permet en pratique qu'une caractérisation de défauts très limités.

Le document US2015/0017005 décrit une aube témoin comportant des inserts.

### Objet et résumé de l'invention

La présente invention a donc pour but principal de proposer une aube témoin qui pallie ces inconvénients.

Ce but est atteint, selon la revendication 1, grâce à un procédé de fabrication d'une aube témoin pour étalonnage d'un contrôle non destructif par tomographie d'aubes réelles semblables dans leurs formes et leurs dimensions, qui consiste à réaliser par fabrication additive une ébauche tridimensionnelle en résine, à créer des logements de diamètres identiques dans l'épaisseur de ladite ébauche à des emplacements prédéterminés, et à introduire dans chacun desdits logements un cylindre comportant un défaut artificiel ou réel pour obtenir ladite aube témoin, lesdits cylindres comportant chacun deux séries de trous de petit diamètre entourant un trou central non débouchant de plus gros diamètre destiné à recevoir un élément du même matériau que dans les trous de petit diamètre, de façon à définir la densité de référence de ce matériau.

Ainsi, par cette insertion de cylindres comportant des anomalies artificielles ou des défauts réels qui eux-mêmes peuvent être insérés en différents endroits dans l'aube témoin en résine, il est possible de couvrir toute la diversité des défauts (densité, forme, taille, localisation) pouvant être présents dans ces aubes. Ceci permet d'avoir une caractérisation complète du moyen de contrôle.

De préférence, lorsqu'il reste un vide dans l'épaisseur de ladite ébauche une fois ledit cylindre inséré dans ledit logement, ledit vide est comblé par un bouchon de résine.

Avantageusement, les cylindres munis de défauts artificiels sont réalisés en résine et les cylindres munis de défauts réels sont réalisés en matériau composite à partir de ladite aube réelle.

L'invention concerne également une aube témoin selon la revendication 4, réalisée en résine par fabrication additive et présentant une configuration externe semblable dans sa forme et ses dimensions à une aube réelle destinée à être soumise à un contrôle non destructif par tomographie, l'aube témoin comportant une série de logements dans l'épaisseur de ladite aube témoin à des emplacements prédéterminés, chacun desdits logements devant recevoir un cylindre comportant un défaut artificiel ou un défaut réel et lesdits cylindres comportant chacun deux séries de trous de petit diamètre entourant un trou central non débouchant de plus gros diamètre destiné à recevoir un élément du même matériau que dans les trous de petit diamètre, de façon à définir la densité de référence de ce matériau.

De préférence, les cylindres munis des défauts artificiels sont réalisés en résine et les cylindres munis des défauts réels sont réalisés en matériau composite à partir de ladite aube réelle.

Avantageusement, lesdits logements et lesdits cylindres ont tous un même diamètre de sorte qu'un cylindre quelconque peut être placé dans n'importe lequel desdits logements par un simple emboitement.

De préférence, lesdits cylindres ont une même hauteur correspondant à l'épaisseur de ladite aube témoin la plus fine susceptible de recevoir un tel cylindre.

Avantageusement, l'aube témoin comporte en outre des bouchons en résine pour maintenir lesdits cylindres en position dans lesdits logements et combler le vide restant dans l'épaisseur de ladite aube témoin.

De préférence, lesdits logements sont des fenêtres traversant l'épaisseur de ladite aube témoin.

Avantageusement, lesdits cylindres comportent chacun deux séries de trois trous de petit diamètre entourant un trou central de plus gros diamètre, chaque série de trois trous de petit diamètre étant positionnée dans ledit cylindre de manière à créer trois axes orthogonaux entre eux. Lorsque le cylindre comporte douze trous, lesdits trous de petits diamètres peuvent être disposés par paire de deux diamètres différents.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- les figures 1A et 1B sont des vues de face et de côté d'une aube témoin selon l'invention ;
- les figures 2A à 2C sont respectivement des sections selon les plans A-A, B-B, et C-C de la figure 1 ;
- la figure 3 montre un premier exemple d'insert mis en œuvre dans une aube témoin ;
- les figures 3A à 3C illustrent des vues en coupe selon les plans A-A, B-B, et C-C de la figure 3 ;
- la figure 4 montre un second exemple d'insert mis en œuvre dans une aube témoin ; et
- les figures 4A à 4C illustrent des vues en coupe selon les plans A-A, B-B, et C-C de la figure 4 .

### Description détaillée d'un mode de réalisation

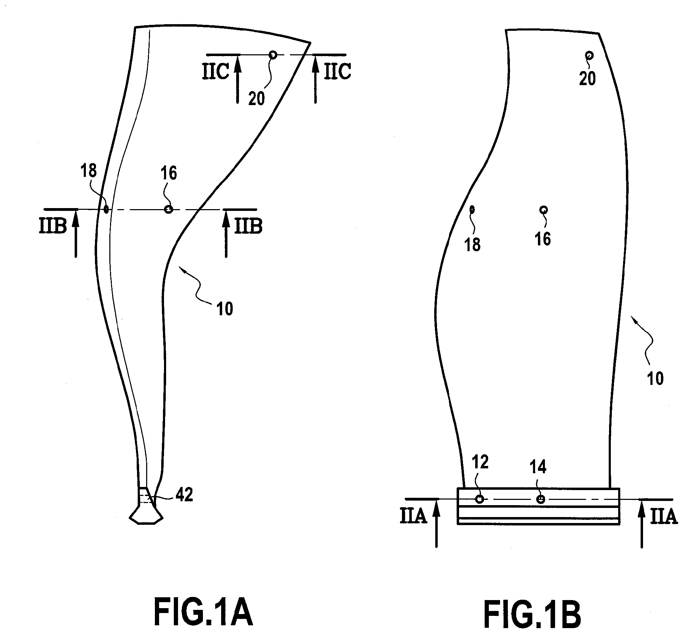

Les figures 1A et 1B illustrent respectivement en élévation et vue côté extrados une aube témoin 10 conforme à l'invention. Cette pièce de référence est réalisée en résine au moyen de tout procédé connu de fabrication additive comme l'impression 3D ou la stéréolithographie et présente une configuration externe semblable dans sa forme et ses dimensions au type d'aube réelle souhaitée qui sera soumis au contrôle non destructif par tomographie, en l'espèce une aube de soufflante de turboréacteur.

Selon l'invention, l'aube témoin comporte une série de cinq logements 12, 14, 16, 18, 20 disposés en cinq zones caractéristiques de l'aube identifiées lors d'une étude préalable et où, par exemple, la détectabilité diffère (épaisseur de l'aube différente - longueur de corde différente - distance au centre de rotation différente).

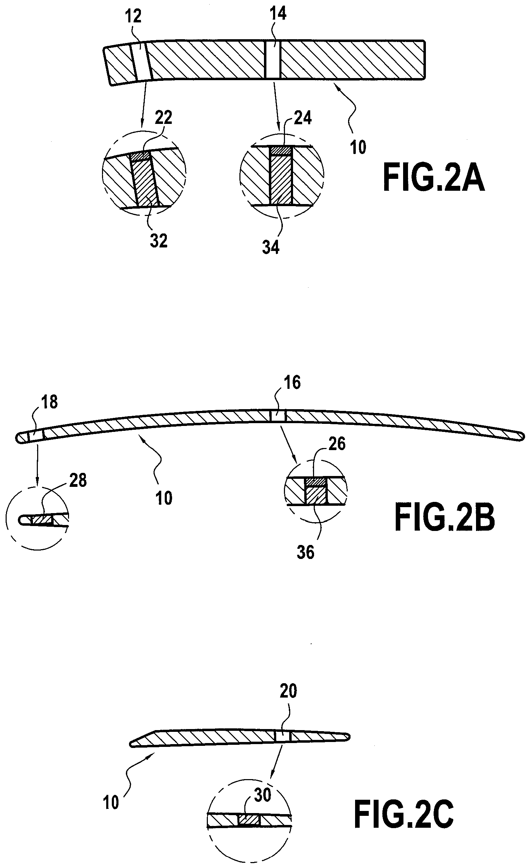

Comme le montre plus particulièrement les figures 2A à 2C, chacun de ces logements constitué avantageusement d'une fenêtre traversant l'épaisseur de l'aube est destinée à recevoir un cylindre 22, 24, 26, 28, 30 comportant un défaut artificiel (anomalie) ou un défaut réel. Les fenêtres ont toutes le même diamètre de manière à établir une loi taille/densité exploitable lors du contrôle tomographique.

Les cylindres destinés à accueillir les défauts artificiels sont réalisés en résine alors que les cylindres munis de défauts réels sont réalisés directement en composite à partir d'une aube réelle issue d'un moulage par injection de type RTM (pour Resin Transfer Molding) par exemple. Les cylindres qui ont tous le même diamètre que les fenêtres peuvent donc être placés dans n'importe laquelle d'entre elles par simple emboitement. En outre, ces cylindres ont avantageusement une même hauteur correspondant à l'épaisseur de l'aube dans la zone caractéristique d'examen à l'épaisseur la plus fine (figure 2C).

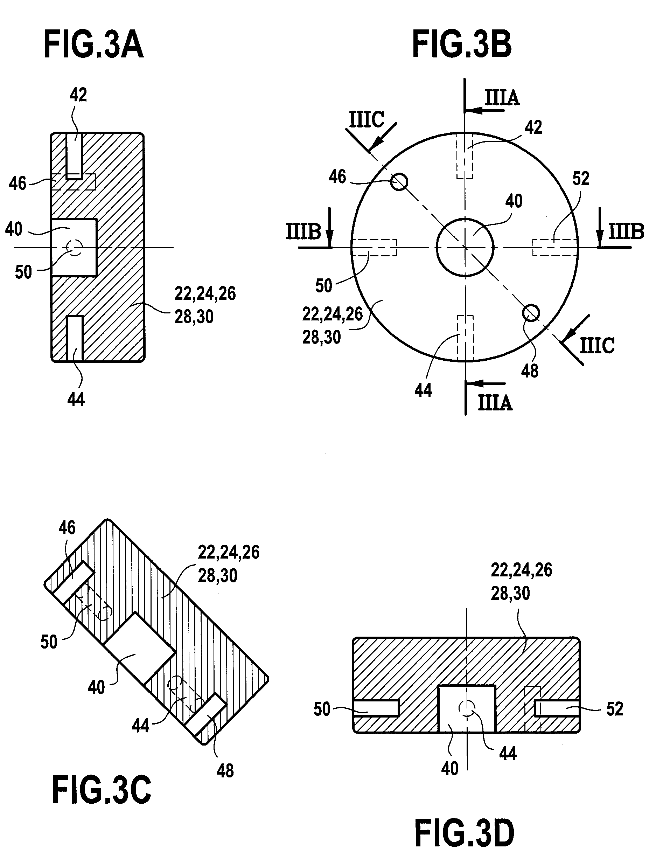

Un premier exemple de cylindre est illustré à la figure 3 et aux figures 3A à 3C. Il est destiné à recevoir des anomalies artificielles et possède deux types de trous. Le premier type est constitué de six trous non débouchant 42, 44, 46, 48, 50, 52 d'un même petit diamètre (typiquement 0,07mm) destinés à recevoir des anomalies d'un matériau donné. Les quatre trous référencés 42, 44, 50, 52 sont répartis régulièrement à la périphérie du cylindre et donc espacés entre eux de 90° alors que les deux derniers trous 46, 48 sont percés sensiblement à l'extrémité d'un diamètre de la face intérieure du cylindre. Ainsi, chaque série de trois trous est positionnée dans le cylindre pour former trois axes orthogonaux entre eux créant une sorte de repère orthogonal (toutefois dont l'une des origines n'est pas concourante avec les deux autres). Le second type est constitué par un trou central non débouchant 40 de plus gros diamètre (typiquement 2,5mm pour un diamètre de cylindre de 10mm) de manière à recevoir un élément du même matériau que dans les autres trous qui l'entourent mais de diamètre significativement plus grand. Ceci de façon à définir la densité de référence de ce matériau.

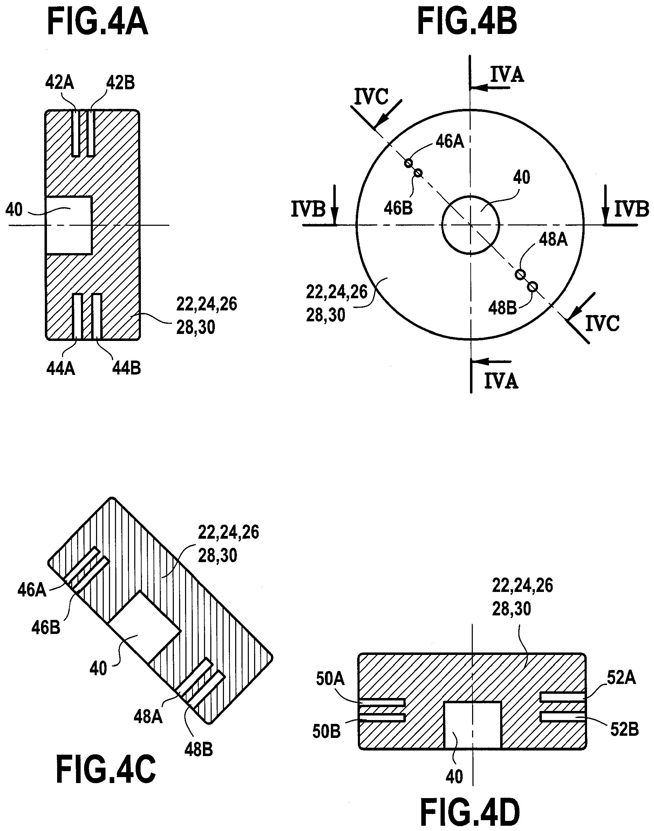

Un second type de cylindre illustré à la figure 4 et aux figures 4A à 4C présente des séries de petits trous non débouchant, en l'espèce des séries de paires de trous non débouchant 42A, 42B ; 44A, 44B ; 46A, 46B ; 48A, 48B ; 50A, 50B ; 52A, 52B de deux diamètres différents (typiquement 0,03mm et 0,04mm) de manière à encadrer le pouvoir de détectabilité du tomographe (notamment sensibilité et résolution). Ces petits trous qui comme précédemment forment trois par trois une sorte de repère orthogonal entourent un trou central non débouchant 40 de plus gros diamètre.

Afin de maintenir la position des cylindres et de combler le vide des fenêtres restant dans l'épaisseur de l'aube témoin, des bouchons en résine 32, 34, 36 sont utilisés (voir les loupes des figures 2A à 2C). Ces bouchons suivent en surface les courbes de l'aube témoin de manière à minimiser les artéfacts (effet de bord). Dans le cas particulier des quatrième et cinquième fenêtres 18, 20 dont l'épaisseur correspond à la hauteur d'un cylindre, un tel bouchon n'est bien sûr pas nécessaire, l'éventuel ajustement du cylindre par rapport aux faces de l'aube étant réalisé sur une des deux faces de l'aube, plus particulièrement sur la face du cylindre comportant les trous.

La résine de ces bouchons est la même résine que celle utilisée pour la fabrication de l'aube témoin par fabrication additive, de préférence une résine de type époxy, polyester, acrylique ou phénolique ou tout autre matériau plastique homogène permettant l'usinage de trous et de cylindres de très petite taille et de densité proche du RTM.

Si seule une vue de l'aube côté extrados a été illustrée, les bouchons se répartissent bien évidemment en trois séries : une première permettant de placer les cylindres côté extrados de l'aube témoin, une deuxième permettant de positionner les cylindres côté intrados de l'aube témoin, une dernière permettant de mettre les cylindres au cœur de l'aube témoin.

Aussi bien les fenêtres, les cylindres que les bouchons sont ajustés au centième de millimètre près afin de minimiser les zones d'air entre les éléments et donc corrélativement de minimiser les artéfacts géométriques. Cette précision d'ajustage rend nécessaire de définir des conditions de température et d'humidité permettant de retirer et replacer aisément les cylindres dans l'aube témoin. Mais le fait que cette aube témoin soit en résine offre la possibilité de modifier aisément la température de celle-ci au contraire d'une aube en composite RTM.

On notera que le choix de la réalisation de l'aube témoin en résine et non en composite supprime les nombreuses difficultés techniques rencontrées par l'usinage de composite. L'utilisation d'une même résine pour l'aube témoin, les bouchons et certains défauts offre en outre l'avantage de faciliter l'analyse des résultats de par son homogénéité. Avec cette configuration de cylindres tous identiques, il est possible de couvrir une très large gamme de densité d'anomalies (défauts artificiels) pouvant intégrer une aube réelle de soufflante lors de sa fabrication.

On notera également que le positionnement exact des fenêtres est choisi de manière à minimiser les zones de vide. En effet, la hauteur minimale des bouchons étant limitée par leur technique d'usinage, il est nécessaire de placer les fenêtres soit de manière à ne pas avoir besoin de mettre un bouchon en surface soit de manière à laisser suffisamment d'espace entre la surface de l'aube témoin et le cylindre (supérieur ou égal à la hauteur minimale du bouchon) afin de pouvoir placer le bouchon.

## Revendications

1. Procédé de fabrication d'une aube témoin pour étalonnage d'un contrôle non destructif par tomographie d'aubes réelles semblables dans leurs formes et leurs dimensions, qui comporte les étapes consistant à réaliser par fabrication additive une ébauche tridimensionnelle (10) en résine, à créer des logements (12, 14, 16, 18, 20) de diamètres identiques dans l'épaisseur de ladite ébauche en résine à des emplacements prédéterminés, et à introduire dans chacun desdits logements un cylindre (22, 24, 26, 28, 30) comportant un défaut artificiel ou réel pour obtenir ladite aube témoin, lesdits cylindres comportant chacun deux séries de trous de petit diamètre (42, 44, 46, 48, 50, 52 ; 42A, 42B ; 44A, 44B ; 46A, 46B ; 48A, 48B ; 50A, 50B ; 52A, 52B) entourant un trou central non débouchant (40) de plus gros diamètre destiné à recevoir un élément du même matériau que dans les trous de petit diamètre, de façon à définir la densité de référence de ce matériau.

2. Procédé selon la revendication 1, comprenant en outre l'étape consistant à combler par un bouchon de résine (32, 34, 36) un vide restant dans l'épaisseur de ladite ébauche une fois ledit cylindre inséré dans ledit logement.

3. Procédé selon la revendication 2, comprenant en outre l'étape consistant à réaliser les cylindres munis de défauts artificiels en résine et à réaliser les cylindres munis de défauts réels en matériau composite à partir de ladite aube réelle.

4. Aube témoin (10) réalisée en résine par fabrication additive et présentant une configuration externe semblable dans sa forme et ses dimensions à une aube réelle destinée à être soumise à un contrôle non destructif par tomographie, l'aube témoin comportant une série de logements (12, 14, 16, 18, 20) de diamètres identiques dans l'épaisseur de ladite aube témoin à des emplacements prédéterminés, chacun desdits logements devant recevoir un cylindre (22, 24, 26, 28, 30) comportant un défaut artificiel ou un défaut réel et lesdits cylindres comportant chacun deux séries de trous de petit diamètre (42, 44, 46, 48, 50, 52 ; 42A, 42B ; 44A, 44B ; 46A, 46B ; 48A, 48B ; 50A, 50B ; 52A, 52B) entourant un trou central non débouchant (40) de plus gros diamètre destiné à recevoir un élément du même matériau que dans les trous de petit diamètre, de façon à définir la densité de référence de ce matériau.

5. Aube témoin selon la revendication 4, dans laquelle les cylindres munis des défauts artificiels sont réalisés en résine et les cylindres munis des défauts réels sont réalisés en matériau composite à partir de ladite aube réelle.

6. Aube témoin selon la revendication 4 ou la revendication 5, dans laquelle lesdits logements et lesdits cylindres ont tous un même diamètre de sorte qu'un cylindre quelconque peut être placé dans n'importe lequel desdits logements par un simple emboitement.

7. Aube témoin selon l'une quelconque des revendications 4 à 6, dans laquelle lesdits cylindres ont une même hauteur correspondant à l'épaisseur de ladite aube témoin la plus fine susceptible de recevoir un tel cylindre.

8. Aube témoin selon l'une quelconque des revendications 4 à 7, comportant en outre des bouchons en résine (32, 34, 36) pour maintenir lesdits cylindres en position dans lesdits logements et combler le vide restant dans l'épaisseur de ladite aube témoin.

9. Aube témoin selon l'une quelconque des revendications 4 à 8, dans laquelle lesdits logements sont des fenêtres traversant l'épaisseur de ladite aube témoin.

10. Aube témoin selon l'une quelconque des revendications 4 à 9, dans laquelle lesdits cylindres comportent chacun deux séries de trois trous de petit diamètre (42, 44, 46, 48, 50, 52) entourant le trou central (40) de plus gros diamètre, chaque série de trois trous de petit diamètre étant positionnée dans ledit cylindre de manière à créer trois axes orthogonaux entre eux.

11. Aube témoin selon l'une quelconque des revendications 4 à 9, dans laquelle lesdits cylindres comportent chacun deux séries de six trous de petit diamètre (42A, 42B ; 44A, 44B ; 46A, 46B ; 48A, 48B ; 50A, 50B ; 52A, 52B) entourant le trou central (40) de plus gros diamètre, chaque série de six trous de petit diamètre étant positionnée dans ledit cylindre de manière à créer trois axes orthogonaux entre eux, lesdits trous de petits diamètres étant disposés par paire de deux diamètres différents.

## Patentansprüche

1. Verfahren zur Herstellung einer Kontrollschaufel zum Kalibrieren einer zerstörungsfreien Inspektion durch Tomographie realer Schaufeln, die in ihren Formen und ihren Abmessungen ähnlich sind, das die Schritte umfasst, die darin bestehen, durch additive Fertigung einen dreidimensionalen Rohling (10) aus Harz herzustellen, Aufnahmen (12, 14, 16, 18, 20) mit identischen Durchmessern in die Dicke des Rohlings aus Harz an vorher festgelegten Stellen einzuarbeiten und in jede der Aufnahmen einen Zylinder (22, 24, 26, 28, 30) einzusetzen, der einen künstlichen oder realen Fehler aufweist, um die Kontrollschaufel zu erhalten, wobei die Zylinder jeweils zwei Reihen Löcher mit kleinem Durchmesser (42, 44, 46, 48, 50, 52; 42A, 42B; 44A, 44B; 46A, 46B; 48A, 48B, 50A, 50B; 52A, 52B) aufweisen, die ein nicht ausmündendes zentrales Loch (40) größeren Durchmessers umgeben, das bestimmt ist, ein Element aus demselben Material wie in den Löchern mit kleinem Durchmesser derart aufzunehmen, dass die Referenzdichte dieses Materials definiert wird.

2. Verfahren nach Anspruch 1, umfassend ferner einen Schritt, der darin besteht, eine in der Dicke des Rohlings verbliebene Leerstelle mit einem Harzstopfen (32, 34, 36) zu verschließen, sobald der Zylinder in die Aufnahme eingesetzt ist.

3. Verfahren nach Anspruch 2, umfassend ferner den Schritt, der darin besteht, die Zylinder aus Harz herzustellen, die mit künstlichen Fehlern versehen sind, und die Zylinder aus Verbundmaterial, die mit realen Fehlern versehen sind, aus der realen Schaufel herzustellen.

4. Kontrollschaufel (10), hergestellt aus Harz durch additive Fertigung und die eine externe Konfiguration aufweist, die in ihrer Form und ihren Abmessungen einer realen Schaufel ähnelt, die bestimmt ist, einer zerstörungsfreien Inspektion durch Tomographie unterzogen zu werden, wobei die Kontrollschaufel eine Reihe von Aufnahmen (12, 14, 16, 18, 20) mit identischen Durchmessern in der Dicke der Kontrollschaufel an vorher festgelegten Stellen aufweist, wobei jede der Aufnahmen einen Zylinder (22, 24, 26, 28, 30) aufnehmen muss, der einen künstlichen Fehler oder realen Fehler aufweist und die Zylinder jeweils zwei Reihen Löcher mit kleinem Durchmesser (42, 44, 46, 48, 50, 52; 42A, 42B; 44A, 44B; 46A, 46B; 48A, 48B, 50A, 50B; 52A, 52B) aufweisen, die ein nicht ausmündendes zentrales Loch (40) größeren Durchmessers umgeben, das bestimmt ist, ein Element aus demselben Material wie in den Löchern mit kleinem Durchmesser derart aufzunehmen, dass die Referenzdichte dieses Materials definiert wird.

5. Kontrollschaufel nach Anspruch 4, wobei die mit künstlichen Fehlern versehenen Zylinder aus Harz hergestellt sind und die mit realen Fehlern versehenen Zylinder aus Verbundmaterial aus der realen Schaufel hergestellt sind.

6. Kontrollschaufel nach Anspruch 4 oder Anspruch 5, wobei die Aufnahmen und die Zylinder alle denselben Durchmesser haben, so dass ein beliebiger Zylinder in eine beliebige der Aufnahmen durch einfaches Einstecken platzierbar ist.

7. Kontrollschaufel nach einem der Ansprüche 4 bis 6, wobei die Zylinder dieselbe Höhe haben, die der dünnsten Dicke der Kontrollschaufel entspricht, die vorgesehen ist, einen derartigen Zylinder aufzunehmen.

8. Kontrollschaufel nach einem der Ansprüche 4 bis 7, aufweisend ferner Harzstopfen (32, 34, 36), um die Zylinder in den Aufnahmen in Position zu halten und um die in der Dicke der Kontrollschaufel verbliebene Leerstelle zu verschließen.

9. Kontrollschaufel nach einem der Ansprüche 4 bis 8, wobei die Aufnahmen Fenster sind, die die Dicke der Kontrollschaufel durchqueren.

10. Kontrollschaufel nach einem der Ansprüche 4 bis 9, wobei die Zylinder jeweils zwei Reihen aus drei Löchern mit kleinem Durchmesser (42, 44, 46, 48, 50, 52) aufweisen, die das zentrale Loch (40) mit größerem Durchmesser umgeben, wobei jede Reihe aus drei Löchern mit kleinem Durchmesser derart im Zylinder platziert ist, dass drei zueinander orthogonale Achsen geschaffen werden.

11. Kontrollschaufel nach einem der Ansprüche 4 bis 9, wobei die Zylinder jeweils zwei Reihen aus sechs Löchern mit kleinem Durchmesser (42A, 42B; 44A, 44B; 46A, 46B; 48A, 48B; 50A, 50B; 52A, 52B) aufweisen, die ein zentrales Loch (40) mit größerem Durchmesser umgeben, wobei jede Reihe aus sechs Löchern mit kleinem Durchmesser derart im Zylinder platziert ist, dass drei zueinander orthogonale Achsen geschaffen werden, wobei die Löcher mit kleinem Durchmesser als Paar mit zwei unterschiedlichen Durchmessern angeordnet sind.

## Claims

1. Method of fabricating a reference blade for calibrating non-destructive inspection by tomography of real blades of similar shapes and dimensions, the method comprising the steps consisting in using additive fabrication to make a three-dimensional blank (10) out of resin, in creating housings (12, 14, 16, 18, 20) in the thickness of said blank at predetermined locations, and in introducing in each of said housings a cylinder (22, 24, 26, 28, 30) including an artificial defect or a real defect in order to obtain said reference blade, each of said cylinders including two series of small-diameter holes (42, 44, 46, 48, 50, 52; 42A, 42B; 44A, 44B; 46A, 46B; 48A, 48B; 50A, 50B; 52A, 52B) surrounding a central non-through hole (40) of larger diameter for receiving an element made of the same material as in the small-diameter holes in order to define the reference density of the material.

2. Method according to claim 1, further including the step of using a resin plug (32, 34, 36) to fill in empty space remaining in the thickness of said blank once said cylinder has been inserted in said housing.

3. Method according to claim 2, further including the step consisting in making the cylinders with artificial defects out of resin and in making the cylinders with real defects out of composite material from said real blade.

4. Reference blade (10) made out of resin by additive fabrication and presenting an outside configuration similar in its shape and its dimensions to a real blade that is to be subjected to non-destructive inspection by tomography, the reference blade including a series of housings (12, 14, 16, 18, 20) in the thickness of said reference blade at predetermined locations, each of said housings being for receiving a cylinder (22, 24, 26, 28, 30) that includes an artificial defect or a real defect, each of said cylinders including two series of small-diameter holes (42, 44, 46, 48, 50, 52; 42A, 42B; 44A, 44B; 46A, 46B; 48A, 48B; 50A, 50B; 52A, 52B) surrounding a central non-through hole (40) of larger diameter for receiving an element made of the same material as in the small-diameter holes in order to define the reference density of the material.

5. Reference blade according to claim 4, wherein the cylinders having artificial defects are made out of resin and the cylinders having real defects are made out of composite material from said real blade.

6. Reference blade according to claim 4 or claim 5, wherein said housings and said cylinders are all of the same diameter such that any cylinder can be placed in any of said housings merely by being engaged therein.

7. Reference blade according to any one of claims 4 to 6, wherein said cylinders have the same height corresponding to the smallest thickness of said reference blade that is to receive such a cylinder.

8. Reference blade according to any one of claims 4 to 7, further including resin plugs (32, 34, 36) for holding said cylinders in position in said housings and for filling in the empty space remaining in the thickness of said reference blade.

9. Reference blade according to any one of claims 4 to 8, wherein said housings are windows passing through the thickness of said reference blade.

10. Reference blade according to any one of claims 4 to 9, wherein each of said cylinders includes two series of three small-diameter holes (42, 44, 46, 48, 50, 52) surrounding a central hole (40) of larger diameter, each series of three small-diameter holes being positioned in said cylinder in such a manner as to create three mutually orthogonal axes.

11. Reference blade according to any one of claims 4 to 9, wherein each of said cylinders includes two series of six small-diameter holes (42A, 42B; 44A, 44B; 46A, 46B; 48A, 48B; 50A, 50B; 52A, 52B) surrounding a central hole (40) of larger diameter, each series of six small-diameter holes being positioned in said cylinder in such a manner as to create three mutually orthogonal axes, said small-diameter holes being arranged in pairs having two different diameters.
